# EUROPEAN PATENT APPLICATION

(11) **EP 4 742 468 A1**
(43) Date of publication of application: **13.05.2026**
(21) Application number: 24211548.3
(22) Date of filing: 07.11.2024
(51) Int. Cl.: H02B 1/56, H02B 13/025

(54) **SWITCHGEAR**

(71) Applicant: ABB SCHWEIZ AG, 5400 Baden (CH)
(72) Inventor: NOVAK, Ondrej, 691 06 Velké Pavlovice (CZ)
(74) Representative: Maiwald GmbH

(57) **Abstract**

The present invention relates to a switchgear (10), comprising:
- a component (20);
- a conduit (80);
- a flap (30); and
- a deflector (60);
wherein the flap and the deflector are located in the conduit;
wherein when the flap is open air (40) from outside the switchgear can enter the switchgear via the conduit;
wherein when the flap is closed air and/or gas is inhibited from exiting the switchgear via the conduit;
wherein in normal operation when the flap is open the air from outside the switchgear is configured to enter the conduit and flow past the flap and then flow past the deflector and be directed to the component to cool the component; and
wherein in the event of an internal arc within the switchgear the flap is configured to close due to the internal arc pressure and gas flow (90) caused by the internal arc.

## Description

### FIELD OF THE INVENTION

The present invention relates a switchgear.

### BACKGROUND OF THE INVENTION

A switchgear 10, such as a medium voltage swithgear, is required to protect people and other equiopment in the locality from an internal arc.

A switchgear can have vents that enable cooling air 40 to enter the swithgear to cool hot components 20 within the switchgear.

An internal arc, if it occurs, generates a pressure wave followed by hot gases.

Therefore, switchgears are equipped with internal arc flaps 30 that close due to the effect of pressure wave and thus prevent any pressure and or hot gasses from leaving switchgear compartment via the cooling vents.

However, an internal arc flap decreases cooling by convection due to two factors.

The first factor is that a constriction of cross sectional area that airflow can pass through is caused by the flap. This increases pressure loss and thus causes momentum energy loss from the flow.

The second factor is that the flap causes large flow separation, that creates a large flow wake 50. This wake takes a lot of momentum energy from the flow and thus decreases the mass flow rate of cooling air coming through the flap.

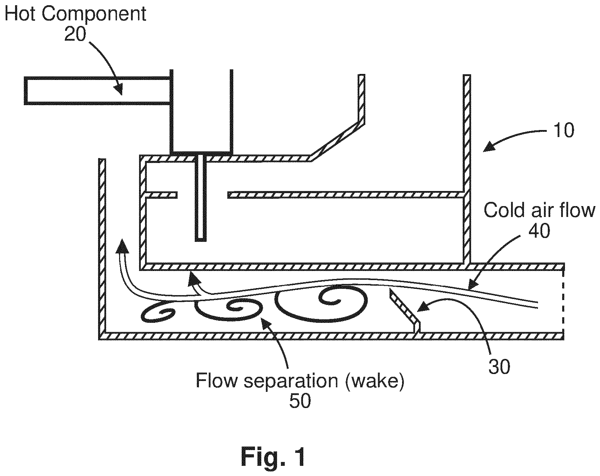

This situation is shown schematically in Fig. 1.

There is a need to address this situation.

### SUMMARY OF THE INVENTION

Therefore, it would be advantageous to provide an improved technique for operation of an internal arc flap of a swithgear.

The object of the present invention is solved with the subject matter of the independent claim, wherein further embodiments are incorporated in the dependent claims.

In an aspect, there is provided a switchgear, comprising:
- a component;
- a conduit;
- a flap; and
- a deflector.

The flap and the deflector are located in the conduit. When the flap is open air from outside the switchgear can enter the switchgear via the conduit. When the flap is closed air and/or gas is inhibited from exiting the switchgear via the conduit. In normal operation when the flap is open the air from outside the switchgear is configured to enter the conduit and flow past the flap and then flow past the deflector and be directed to the component to cool the component. In the event of an internal arc within the switchgear the flap is configured to close due to the internal arc pressure and gas flow caused by the internal arc.

Thus, normally when air flows into a switchgear past an internal arc flap, the air flow separates as it flows pas the flap and a wake is formed, and momentum energy is lost from the air flow and the ability to cool is reduced, however the deflector now stops the flow from separating and the wake from forming behind the flap, and momentum is not lost and there is an increased mass flow rate of cooling air leading to improved cooling of the component.

It is to be noted that in normal operation air can enter the conduit to cool the hot component via natural convection or be directed and forced into the conduit via a fan, for example at the entrance to the conduit.

In an example, in the event of an internal arc within the switchgear the deflector is configured to deform.

In an example, the flap is rotatably connected to a first side wall of the conduit. In the event of the internal arc within the switchgear the flap is configured rotate with an edge portion of the flap being moved toward and brought into contact with a second side wall of the conduit to close the flap due to the internal arc pressure and gas flow caused by the internal arc. In normal operation when the flap is open a first end of the deflector is located adjacent to the edge portion of the flap. In normal operation when the flap is open the air from outside the switchgear is configured to enter the conduit and flow past the flap between the edge portion of the flap and the second side wall of the conduit flow past the first end of the deflector and then flow between a first side of the deflector and the second side wall of the conduit.

In an example, in normal operation when the flap is open the first end of the deflector is connected to the edge portion of the flap.

In an example, in normal operation when the flap is open the first end of the deflector is fitted to the edge portion of the flap without being fixedly attached to the edge portion of the flap.

In an example, in normal operation when the flap is open the first end of the deflector is connected to the edge portion of the flap via at least one bolt.

In an example, in the event of an internal arc within the switchgear the first end of the deflector is configured to detach from the edge portion of the flap due to the internal arc pressure and gas flow caused by the internal arc.

In an example, in the event of an internal arc within the switchgear the at least one bolt is configured to break due to the internal arc pressure and gas flow caused by the internal arc.

In an example, in the event of an internal arc within the switchgear a second side deflector opposite to the first side of the deflector is configured to be moved towards the first side of the conduit due to the internal arc pressure and gas flow caused by the internal arc.

In an example, the deflector is configured to withstand air velocities of 1-5 m/s.

In an example, the deflector is configured not to deform when subjected to air velocities of 1-5 m/s.

In an example, the deflector is configured not to withstand air velocities of 50-150 m/s.

In an example, the deflector is configured to deform and/or crumple when subjected to air velocities of 50-150 m/s.

Thus, the deflector inhibits flow separation and wake formation and thus increase cooling performance in normal operation, but in the event of an internal arc event the deflector deforms and does not compromise the normal closing operation of the flap.

In an example, the deflector comprises at least one hole 70 along its length, and wherein the one or more holes are configured to enable air to flow through the deflector.

In this way, air can flow through the deflector from a side of the deflector where the cooling air is not flowing to a side of the deflector across which the cooling air is flowing, and this flow through the deflector serves to maintain a steady flow of the cooling air and maximises the mass flow rate of the cooling air.

In an example, the deflector comprises plastic.

### BRIEF DESCRIPTION OF THE DRAWINGS

Exemplary embodiments will be described in the following with reference to the following drawing:
Fig. 1 shows a schematic representation of a known switchgear with an internal arc flap;
Fig. 2 shows a schematic representation of a new switchgear with an internal arc flap and deflector in normal operation with the flap open; and
Fig. 3 shows a schematic representation of the new switchgear with an internal arc flap and deflector of Fig. 2 in the event of an internal arc when the flap has been closed due to the internal arc pressure and gas flow caused by the internal arc.

### DETAILED DESCRIPTION OF EMBODIMENTS

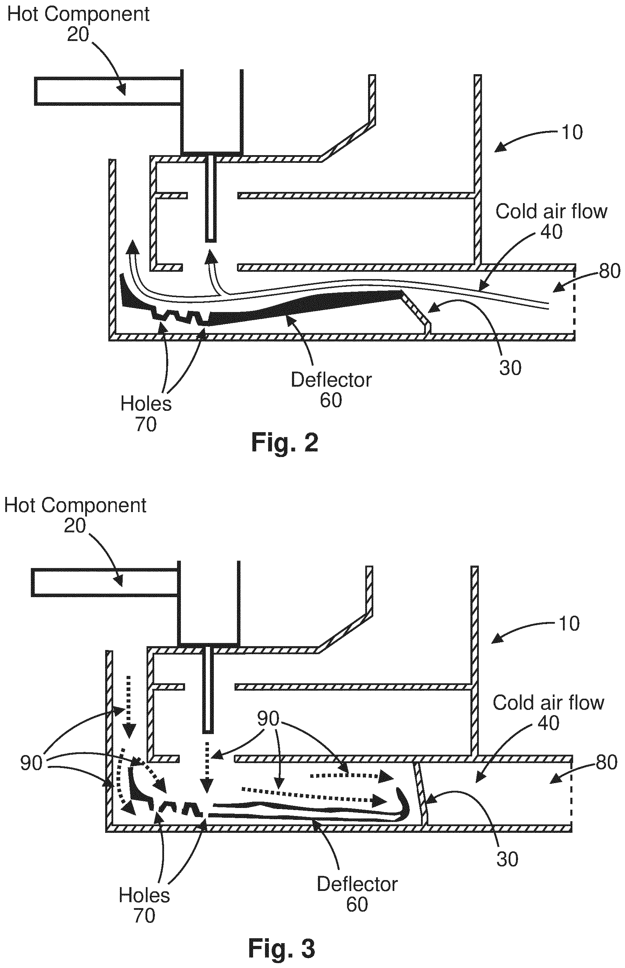

Figs. 2-3 relate to a new switchgear with an internal arc flap and deflector.

An exemplar switchgear 10, comprises:
- a component 20;
- a conduit 80;
- a flap 30; and
- a deflector 60.

The flap and the deflector are located in the conduit. When the flap is open air 40 from outside the switchgear can enter the switchgear via the conduit. When the flap is closed air and/or gas is inhibited from exiting the switchgear via the conduit. In normal operation when the flap is open the air from outside the switchgear is configured to enter the conduit and flow past the flap and then flow past the deflector and be directed to the component to cool the component. In the event of an internal arc within the switchgear the flap is configured to close due to the internal arc pressure and gas flow 90 caused by the internal arc.

Thus, normally when air flows into a switchgear past an internal arc flap, the air flow separates as it flows pas the flap and a wake is formed, and momentum energy is lost from the air flow and the ability to cool is reduced, however the deflector now stops the flow from separating and the wake from forming behind the flap, and momentum is not lost and there is an increased mass flow rate of cooling air leading to improved cooling of the component.

It is to be noted that in normal operation air can enter the conduit to cool the hot component via natural convection or be directed and forced into the conduit via a fan, for example at the entrance to the conduit.

In an example, in the event of an internal arc within the switchgear the deflector is configured to deform.

In an example, the flap is rotatably connected to a first side wall of the conduit. In the event of the internal arc within the switchgear the flap is configured rotate with an edge portion of the flap being moved toward and brought into contact with a second side wall of the conduit to close the flap due to the internal arc pressure and gas flow caused by the internal arc. In normal operation when the flap is open a first end of the deflector is located adjacent to the edge portion of the flap. In normal operation when the flap is open the air from outside the switchgear is configured to enter the conduit and flow past the flap between the edge portion of the flap and the second side wall of the conduit flow past the first end of the deflector and then flow between a first side of the deflector and the second side wall of the conduit.

In an example, in normal operation when the flap is open the first end of the deflector is connected to the edge portion of the flap.

In an example, in normal operation when the flap is open the first end of the deflector is fitted to the edge portion of the flap without being fixedly attached to the edge portion of the flap.

In an example, in normal operation when the flap is open the first end of the deflector is connected to the edge portion of the flap via at least one bolt.

In an example, in the event of an internal arc within the switchgear the first end of the deflector is configured to detach from the edge portion of the flap due to the internal arc pressure and gas flow caused by the internal arc.

In an example, in the event of an internal arc within the switchgear the at least one bolt is configured to break due to the internal arc pressure and gas flow caused by the internal arc.

In an example, in the event of an internal arc within the switchgear a second side deflector opposite to the first side of the deflector is configured to be moved towards the first side of the conduit due to the internal arc pressure and gas flow caused by the internal arc.

In an example, the deflector is configured to withstand air velocities of 1-5 m/s.

In an example, the deflector is configured not to deform when subjected to air velocities of 1-5 m/s.

In an example, the deflector is configured not to withstand air velocities of 50-150 m/s.

In an example, the deflector is configured to deform and/or crumple when subjected to air velocities of 50-150 m/s.

Thus, the deflector inhibits flow separation and wake formation and thus increase cooling performance in normal operation, but in the event of an internal arc event the deflector deforms and does not compromise the normal closing operation of the flap.

In an example, the deflector comprises at least one hole 70 along its length, and wherein the one or more holes are configured to enable air to flow through the deflector.

In this way, air can flow through the deflector from a side of the deflector where the cooling air is not flowing to a side of the deflector across which the cooling air is flowing, and this flow through the deflector serves to maintain a steady flow of the cooling air and maximises the mass flow rate of the cooling air.

In an example, the deflector comprises plastic.

The new switchgear with an internal arc flap and deflector, is further described where reference is again made to Figs. 2-3.

As discussed above, an internal arc flap decreases cooling by convection due to two factors.

The first factor is that a constriction of cross sectional area that airflow can pass through is caused by the flap. This increases pressure loss and thus causes momentum energy loss from the flow.

The second factor is that the flap causes large flow separation, that creates a large flow wake 50. This wake takes a lot of momentum energy from the flow and thus decreases the mass flow rate of cooling air coming through the flap.

While the constriction of the cross sectional area for the flow cannot be improved, the wake area 50 can be removed by utilization of a deflector 60.

The deflector 60 is shown in Fig. 2. Cooling air 40 flows into a conduit 80 of a switchgear 10 and flows over a hot component 20 to cool it. The air can flow into the conduit by natural convection or be directed in via a fan. Without the deflector 60, the cooling air separates and forms a wake 50 as it flows past the flap 30 between the flap and a wall of the conduit. With the deflector the flow wake does not occur and flow separation is inhibited. Thus, the flow does not lose momentum energy and mass flow rate is increased. Increased mass flow rate of cooling air translates into decreased temperatures for the hot component being cooled.

The deflector can improve situation for natural convection and forced convection (e.g. with a fan). Natural convection is more sensitive to momentum energy loss, thus the decrease can be significantly lower. On the other hand, forced convection is sensitive to flow separations that stall the air in front of fan, causing significant decrease in performance. The deflector can improve these.

Studies have shown that improvement of around 5K can be easily achieved in the entire compartment and even more in the event of thorough CFD optimization of the shapes.

Regarding the deflector itself, the following further information is provided:
In the event of an internal arc, the flow velocities change the direction and velocity magnitudes increase about 100 times. For this reason several measures are built into the deflector:
1) The deflector material is intentionally weak. Very thin plastic, for example, can easily withstand 1-5 m/s but will quickly crumple under the pressure from velocities 50-150m/s. Thus, the deflector does not present itself as much of an obstacle for the internal arc pressure wave, with respect to the pressure wave from the internal arc closing the flap 30.
2) The deflector has holes 70, which helps the cooling air that flows over the deflector maintaining a steady flow, in a similar manner to how air flow up out of the top surface of an airplane's wing helps maintain the integrity of the air flow over the wing.
3) When an internal arc occurs a pressure wave is generated and massively increased air flows in the opposite direction to the previous cooling air. The holes in the deflector enable some of this pressure wave to flow through the deflector and towards the flap and the holes also help the deflector to deforms enabling the pressure wave to interact with the flap and close it.
4) The deflector can be connected to the entire structure by weak plastic bolts, which maintain the deflector in place when the flap is open and cooling air is flowing into the switchgear, but the in event of the internal arc the plastic bolts can fail due to the pressure increase with the deflector then being forced against the side of the conduit facilitating the pressure wave in closing the flap. If built correctly, the deflector does not have to be fixedly connected to the structure in any way and just connected to the flap through it being fitted into the structure by its shape. The deflector can be made of very thin deformable plastic and thus this aids the deflector in being deformed and pushed against the conduit wall due to the internal arc pressure wave, such that operation of closing of the flap is not hindered in any way.

All these measures will allow internal arc pressure to interact with the deflector and in effect destroy it in the process, and then interact with the flap in an unhindered manner to close it. Thus, the pressure wave will close internal arc flap as usual, whilst in normal operation the deflector mitigates wake generation behind the flap and improves switchgear cooling.

### Reference numerals

- 10: switchgear
- 20: hot component
- 30: flap
- 40: cold air flow
- 50: flow separation / wake
- 60: deflector
- 70: holes in deflector
- 80: conduit
- 90: pressure wave due to an internal arc

## Claims

1. A switchgear (10), comprising:
- a component (20);
- a conduit (80);
- a flap (30); and
- a deflector (60);
wherein the flap and the deflector are located in the conduit;
wherein when the flap is open air (40) from outside the switchgear can enter the switchgear via the conduit;
wherein when the flap is closed air and/or gas is inhibited from exiting the switchgear via the conduit;
wherein in normal operation when the flap is open the air from outside the switchgear is configured to enter the conduit and flow past the flap and then flow past the deflector and be directed to the component to cool the component; and
wherein in the event of an internal arc within the switchgear the flap is configured to close due to the internal arc pressure and gas flow (90) caused by the internal arc.

2. Switchgear according to claim 1, wherein in the event of an internal arc within the switchgear the deflector is configured to deform.

3. Switchgear according to any of claims 1-2, wherein the flap is rotatably connected to a first side wall of the conduit, wherein in the event of the internal arc within the switchgear the flap is configured rotate with an edge portion of the flap being moved toward and brought into contact with a second side wall of the conduit to close the flap due to the internal arc pressure and gas flow caused by the internal arc, wherein in normal operation when the flap is open a first end of the deflector is located adjacent to the edge portion of the flap, wherein in normal operation when the flap is open the air from outside the switchgear is configured to enter the conduit and flow past the flap between the edge portion of the flap and the second side wall of the conduit flow past the first end of the deflector and then flow between a first side of the deflector and the second side wall of the conduit.

4. Switchgear according to claim 3, wherein in normal operation when the flap is open the first end of the deflector is connected to the edge portion of the flap.

5. Switchgear according to claim 4, wherein in normal operation when the flap is open the first end of the deflector is fitted to the edge portion of the flap without being fixedly attached to the edge portion of the flap.

6. Switchgear according to claim 4, wherein in normal operation when the flap is open the first end of the deflector is connected to the edge portion of the flap via at least one bolt.

7. Switchgear according to any of claims 4-6, wherein in the event of an internal arc within the switchgear the first end of the deflector is configured to detach from the edge portion of the flap due to the internal arc pressure and gas flow caused by the internal arc.

8. Switchgear according to claim 7 when dependent upon claim 6, wherein in the event of an internal arc within the switchgear the at least one bolt is configured to break due to the internal arc pressure and gas flow caused by the internal arc

9. Switchgear according to any of claims 3-8, wherein in the event of an internal arc within the switchgear a second side deflector opposite to the first side of the deflector is configured to be moved towards the first side of the conduit due to the internal arc pressure and gas flow caused by the internal arc.

10. Switchgear according to any of claims 1-9, wherein the deflector is configured to withstand air velocities of 1-5 m/s.

11. Switchgear according to claim 8, wherein the deflector is configured not to deform when subjected to air velocities of 1-5 m/s.

12. Switchgear according to any of claims 1-12, wherein the deflector is configured not to withstand air velocities of 50-150 m/s.

13. Switchgear according to claim 13, wherein the deflector is configured to deform and/or crumple when subjected to air velocities of 50-150 m/s.

14. Switchgear according to any of claims 1-13, wherein the deflector comprises at least one hole (70) along its length, and wherein the one or more holes are configured to enable air to flow through the deflector.

15. Switchgear according to any of claims 1-14, wherein the deflector comprises plastic.
